# EUROPEAN PATENT APPLICATION

(11) **EP 2 172 421 A1**
(43) Date of publication of application: **07.04.2010**
(21) Application number: 09734125.9
(22) Date of filing: 23.04.2009
(51) Int. Cl.: C01B 3/38, H01M 8/04, H01M 8/06

(54) **HYDROGEN PRODUCTION DEVICE, AND FUEL CELL SYSTEM PROVIDED WITH THE SAME**

(30) Priority: 24.04.2008 JP 2008113554
(71) Applicant: Panasonic Corporation, Kadoma-shi Osaka 571-8501 (JP)
(72) Inventor: WATIKA, Hidenobu, Osaka-shi, Osaka 540-6207, (JP); KANI, Yukimune, Osaka-shi, Osaka 540-6207, (JP); FUJIHARA, Seiji, Osaka-shi, Osaka 540-6207, (JP)
(74) Representative: Grünecker, Kinkeldey, Stockmair & Schwanhäusser Anwaltssozietät
(86) International application number: PCT/JP2009/001863
(87) International publication number: WO 2009/130907

(57) **Abstract**

In an operating step of supplying only a raw material to a hydrogen generating device, deterioration of a catalyst is suppressed as compared to the conventional art.

A hydrogen generating apparatus contains a hydrogen generating device 1 containing a reforming device that generates a hydrogen-containing gas from a raw material containing a sulfur component and a hydrocarbon component; a desulfurizing device 4 that removes the sulfur component in the raw material; a hydrocarbon removing device 13 that removes a part of the hydrocarbon component in the raw material, on an upstream side or a downstream side of the desulfurizing device 4; a first raw material supplying path 23 that passes the raw material through only the desulfurizing device among the desulfurizing device 4 and the hydrocarbon removing device 13, and flows the raw material into the hydrogen generating device 1; a second raw material supplying path 24 that passes the raw material through the desulfurizing device 4 and the hydrocarbon removing device 13, and flows the raw material into the hydrogen generating device 1; a flow path switching device 9 that switches a flow path of the raw material between the first raw material supplying path 23 and the second raw material supplying path 24; and a controlling device 20 that controls operation of the flow path switching device 9, and the controlling device switches the flow path of the raw material to the second raw material supplying path 24 with the flow path switching device 9 in an operating step of supplying only the raw material to the hydrogen generating device 1.

## Description

### Technical Field

The present disclosure relates to a hydrogen generating apparatus that generates a hydrogen-containing gas through reforming reaction of a raw material, and a fuel cell system that performs electric power operation using the hydrogen-containing gas.

### Background Art

A fuel cell system capable of generating electric power in high efficiency with a small-sized apparatus is being developed as a distributed energy source. However, hydrogen gas used as a fuel upon generating electric power has not yet been provided as a general infrastructure. Accordingly, a fuel cell system is equipped with a hydrogen generating apparatus that generates a hydrogen-containing gas by utilizing a raw material supplied from an existing raw material infrastructure, for example, city gas, propane gas and the like.

City gas and propane gas that are supplied from an existing infrastructure are added with an odorant, which is represented by a sulfur component, such as CH₃SCH₃ and (CH₃)₃CSH, in a volume concentration of approximately several ppm for detecting leakage from the gas plumbing and the like of the infrastructure. However, the odorant, which is a sulfur component, functions as a poisoning component to a catalyst used in the hydrogen generating apparatus, and it is necessary to remove the sulfur component for suppressing the influence of poisoning to the minimum.

Such a method has been proposed that a sulfur component in a raw material is removed in advance with an adsorption desulfurizing device using a zeolite adsorption removing agent (see, for example, Patent Document 1).

However, the adsorption desulfurizing device has a small adsorption capacity with respect to a sulfur component and is necessarily exchanged periodically for suppressing the influence of sulfur poisoning on the catalyst used in the hydrogen generating apparatus to the minimum. Such a system is proposed that fuel cell systems are networked for exchanging the adsorption desulfurizing devices at the appropriate time (see, for example, Patent Document 2).

For operating a fuel cell system in high efficiency, it is desired that the system is started and stopped frequently according to the demand for electric power. On the other hand, the catalyst used in the hydrogen generating apparatus may be deteriorated (reduction in capability) due to oxidation and exposure to water occurring by start and stop. Specifically, for example air is introduced into the hydrogen generating apparatus due to negative pressure inside the apparatus upon start and stop, whereby the catalyst is oxidized with the air. Furthermore, when the temperature is lowered to the dew point in the state where steam remains in the hydrogen generating apparatus upon stopping, water drops are formed to expose the catalyst to water.

Upon deterioration of the catalyst, such failures occur as reduction in generating amount of the hydrogen-containing gas and increase in CO concentration in the hydrogen-containing gas at the outlet of the hydrogen generating apparatus. Therefore, it is necessary to prevent the catalyst from being deteriorated upon starting and stopping. Accordingly, a purge operation (substitution of the interior of the apparatus) with an inert gas is performed for preventing the hydrogen-containing gas from remaining in the hydrogen generating apparatus upon stopping the apparatus.

However, the operation method using the purge operation with an inert gas, such as nitrogen, requires a gas cylinder having the inert gas stored therein, and thus it is not practical for household use due to problems of the installation location and the exchange operation of the gas cylinder. From the standpoint of prevention of oxidation, such a method is proposed that the raw material used for the reforming reaction of the hydrogen generating apparatus is used instead of the inert gas, such as nitrogen (raw material purge) (see, for example, Patent Document 3).

In the hydrogen generating apparatus disclosed in Patent Document 3, after stopping generation of the hydrogen-containing gas, it is proposed to perform a pressure supplementing operation of supplying the raw material to the interior of the hydrogen generating apparatus to supplement at least a part of the pressure that has been decreased due to decrease of the temperature.

Furthermore, such a method is proposed that the temperature of the hydrogen generating apparatus is increased while flowing the raw material through the interior of the hydrogen generating apparatus upon starting (see, for example, Patent Document 4).

### Documents of Related Art

### Patent Documents

Patent Document 1: JP-A-2004-228016
Patent Document 2: JP-A-2006-278120
Patent Document 3: JP-A-2003-229156
Patent Document 4: JP-A-62-184774

### Summary of the Disclosure

### Problems to be solved by the Disclosure

However, in all the raw material purge and the pressure supplementing operation in the hydrogen generating apparatus disclosed in Patent Document 3 and the temperature increasing operation in the hydrogen generating apparatus disclosed in Patent Document 4, only the raw material is supplied into the hydrogen generating apparatus, and there are cases where the catalyst is deteriorated in these operations.

In consideration of the problems in the conventional hydrogen generating apparatuses, an object of the present disclosure is to provide such a hydrogen generating apparatus that deterioration of the catalyst in the operation of supplying only the raw material to the hydrogen generating apparatus is suppressed as compared to the conventional apparatuses, and to provide a fuel cell system using the same.

### Means for solving the Problems

A hydrogen generating apparatus according to the 1^{st} aspect of the present disclosure comprises:
a hydrogen generating device containing a reforming device that generates a hydrogen-containing gas from a raw material containing a sulfur component and a hydrocarbon component;
a desulfurizing device that removes the sulfur component in the raw material by passing the raw material therethrough;
a hydrocarbon removing device that removes a part of the hydrocarbon component in the raw material by passing the raw material therethrough, on an upstream side or a downstream side of the desulfurizing device;
a first raw material supplying path that passes the raw material through only the desulfurizing device among the desulfurizing device and the hydrocarbon removing device, and that flows the raw material into the hydrogen generating device;
a second raw material supplying path that passes the raw material through the desulfurizing device and the hydrocarbon removing device, and that flows the raw material into the hydrogen generating device;
a flow path switching device that switches a flow path of the raw material between the first raw material supplying path and the second raw material supplying path; and
a controlling device that controls operation of the flow path switching device,
and **characterized in that** the controlling device switches the flow path of the raw material to the second raw material supplying path with the flow path switching device in an operating step of supplying only the raw material to the hydrogen generating device.

The hydrogen generating apparatus according to the 2^{nd} aspect of the present disclosure is **characterized in that** the raw material contains methane and at least a hydrocarbon having two or more carbon chain.

The hydrogen generating apparatus according to the 3^{rd} aspect of the present disclosure is **characterized in that** the hydrocarbon removing device removes the hydrocarbon having two or more carbon chain.

The hydrogen generating apparatus according to the 4^{th} aspect of the present disclosure is **characterized in that** the raw material contains propane and at least a hydrocarbon having four or more carbon chain.

The hydrogen generating apparatus according to the 5^{th} aspect of the present disclosure is **characterized in that** the hydrocarbon removing device removes the hydrocarbon having four or more carbon chain.

The hydrogen generating apparatus according to the 6^{th} aspect of the present disclosure is **characterized in that** the hydrocarbon removing device contains a hydrocarbon removing agent containing zeolite.

The hydrogen generating apparatus according to the 7^{th} aspect of the present disclosure is **characterized in that** the hydrocarbon removing device contains a hydrocarbon removing agent containing activated carbon.

The hydrogen generating apparatus according to the 8^{th} aspect of the present disclosure is **characterized in that** the apparatus comprises:
a first connecting device that connects the desulfurizing device and the first raw material supplying path; and
a second connecting device that connects the hydrocarbon removing device and the second raw material supplying path, and
the first connecting device and the second connecting device have compatibility with each other.

The hydrogen generating apparatus according to the 9^{th} aspect of the present disclosure is **characterized in that** in a hydrogen generating operation in a starting process, the controlling device controls the flow path switching device to switch the flow path of the raw material to the first raw material supplying path.

The hydrogen generating apparatus according to the 10^{th} aspect of the present disclosure is **characterized in that**:
the apparatus comprises a combustion device that heats the reforming device,
the apparatus is so constituted that the raw material having passed through the hydrogen generating device is combusted in the combustion device to perform a temperature increasing operation of heating the reforming device in a starting process, and
the controlling device, in the temperature increasing operation, controls the flow path switching device to switch the flow path of the raw material to the first raw material supplying path when the temperature of the reforming device is less than a first threshold value, and controls the flow path switching device to switch the flow path of the raw material to the second raw material supplying path when the temperature of the reforming device is the first threshold value or more.

The hydrogen generating apparatus according to the 11^{th} aspect of the present disclosure is **characterized in that**:
the apparatus is so constituted that a pressure supplementing operation of supplying the raw material to the hydrogen generating device is performed to increase the pressure inside the hydrogen generating device, which had been decreased after stopping a hydrogen generating operation, and
the controlling device, in the pressure supplementing operation, controls the flow path switching device to switch the flow path of the raw material to the second raw material supplying path.

The hydrogen generating apparatus according to the 12^{th} aspect of the present disclosure is **characterized in that**:
the apparatus is so constituted that raw material purge of purging an interior of the hydrogen generating device with the raw material is performed after stopping a hydrogen generating operation, and
the controlling device, in the raw material purge, controls the flow path switching device to switch the flow path of the raw material to the second raw material supplying path.

The hydrogen generating apparatus according to the 13^{th} aspect of the present disclosure is **characterized in that**:
the apparatus is so constituted that a pressure supplementing operation of supplying the raw material to the hydrogen generating device is performed to increase the pressure inside the hydrogen generating device, which had been decreased after stopping a hydrogen generating operation, and
is so constituted that raw material purge of purging an interior of the hydrogen generating device with the raw material is performed after stopping a hydrogen generating operation, and
the controlling device, in at least one of the pressure supplementing operation and the raw material purge, controls the flow path switching device to switch the flow path of the raw material to the first raw material supplying path when the temperature of the reforming device is less than a second threshold value, and controls the flow path switching device to switch the flow path of the raw material to the second raw material supplying path when the temperature of the reforming device is the second threshold value or more.

A fuel cell system according to the 14^{th} aspect of the present disclosure is **characterized in that** contains the hydrogen generating apparatus and a fuel cell that uses the hydrogen-containing gas sent from the hydrogen generating apparatus as a fuel.

A method for operating a hydrogen generating apparatus according to the 15^{th} aspect of the present disclosure is a method for operating the hydrogen generating apparatus comprising:
a hydrogen generating device containing a reforming device that generates a hydrogen-containing gas from a raw material containing a sulfur component and a hydrocarbon component;
a desulfurizing device that removes the sulfur component in the raw material by passing the raw material therethrough;
a hydrocarbon removing device that removes a part of the hydrocarbon component in the raw material by passing the raw material therethrough, on an upstream side or a downstream side of the desulfurizing device;
a first raw material supplying path that passes the raw material through only the desulfurizing device among the desulfurizing device and the hydrocarbon removing device, and flows the raw material into the hydrogen generating device;
a second raw material supplying path that passes the raw material through the desulfurizing device and the hydrocarbon removing device, and flows the raw material into the hydrogen generating device; and
a flow path switching device that switches a flow path of the raw material between the first raw material supplying path and the second raw material supplying path, and
the method comprising a step of switching the flow path of the raw material to the second raw material supplying path with the flow path switching device in an operating step of supplying only the raw material to the hydrogen generating device.

The method for operating a hydrogen generating apparatus according to the 16^{th} aspect of the present disclosure is **characterized in that** in a hydrogen generating operation in a starting process, the flow path switching device is controlled to switch the flow path of the raw material to the first raw material supplying path.

The method for operating a hydrogen generating apparatus according to the 17^{th} aspect of the present disclosure is **characterized in that**:
the hydrogen generating apparatus comprises a combustion device that heats the reforming device,
the apparatus is so constituted that the raw material having passed through the hydrogen generating device is combusted in the combustion device to perform a temperature increasing operation of heating the reforming device in a starting process, and
in the temperature increasing operation, the flow path switching device is controlled to switch the flow path of the raw material to the first raw material supplying path when the temperature of the reforming device is less than a first threshold value, and the flow path switching device is controlled to switch the flow path of the raw material to the second raw material supplying path when the temperature of the reforming device is the first threshold value or more.

The method for operating a hydrogen generating apparatus according to the 18^{th} aspect of the present disclosure is **characterized in that**:
the hydrogen generating apparatus is so constituted that a pressure supplementing operation of supplying the raw material to the hydrogen generating device is performed to increase the pressure inside the hydrogen generating device, which had been decreased after stopping a hydrogen generating operation, and
in the pressure supplementing operation, the flow path switching device is controlled to switch the flow path of the raw material to the second raw material supplying path.

The method for operating a hydrogen generating apparatus according to the 19^{th} aspect of the present disclosure is characterized that:
the hydrogen generating apparatus is so constituted that raw material purge of purging an interior of the hydrogen generating device with the raw material is performed after stopping a hydrogen generating operation, and
in the raw material purge, the flow path switching device is controlled to switch the flow path of the raw material to the second raw material supplying path.

The method for operating a hydrogen generating apparatus according to the 20^{th} aspect of the present disclosure is **characterized in that**:
the hydrogen generating apparatus is so constituted that a pressure supplementing operation of supplying the raw material to the hydrogen generating device is performed to increase the pressure inside the hydrogen generating device, which had having been decreased after stopping a hydrogen generating operation, and
is so constituted that raw material purge of purging an interior of the hydrogen generating device with the raw material is performed after stopping a hydrogen generating operation, and
in at least one of the pressure supplementing operation and the raw material purge, the flow path switching device is controlled to switch the flow path of the raw material to the first raw material supplying path when the temperature of the reforming device is less than a second threshold value, and the flow path switching device is controlled to switch the flow path of the raw material to the second raw material supplying path when the temperature of the reforming device is the second threshold value or more.

### Advantages of the Disclosure

According to the present disclosure, in the operating step of supplying only the raw material to the hydrogen generating device, deterioration of the catalyst is suppressed as compared to the conventional art.

### Brief Description of the Drawings

Fig.1 is a schematic illustration of the catalyst characteristics evaluation apparatus in embodiment 1 of the present disclosure.
Fig. 2 is a diagram showing the catalyst characteristics evaluation sequence in embodiment 1 of the present disclosure.
Fig. 3 is a diagram showing the catalyst characteristics evaluation results in embodiment 1 of the present disclosure.
Fig. 4 is a diagram showing the hydrocarbon removal characteristics evaluation results in embodiment 1 of the present disclosure.
Fig. 5(a) is a constitutional illustration of the fuel cell system in embodiment 1 of the present disclosure.
Fig. 5(b) is a constitutional illustration of the hydrogen generating device in embodiment 1 of the present disclosure.
Fig. 6 is a diagram for describing the starting process of the hydrogen generating apparatus in embodiment 1 of the present disclosure.
Fig. 7 is a diagram for describing the stopping process of the hydrogen generating apparatus in embodiment 1 of the present disclosure.
Fig. 8 is a diagram for describing the stopping process of the hydrogen generating apparatus in the modified example 1 of embodiment 1 of the present disclosure.
Fig. 9 is a constitutional illustration of the fuel cell system in the modified example 4 of embodiment 1 of the present disclosure.

### Embodiments of the Invention

The inventors have studied eamestly for solving the problems associated with the conventional art. As a result, it was found that when the raw material purging the interior of the apparatus contains a component having a long C chain (carbon chain), the component having a long C chain is decomposed to cause deterioration of the catalyst and clogging of the flow path due to deposition of carbon.

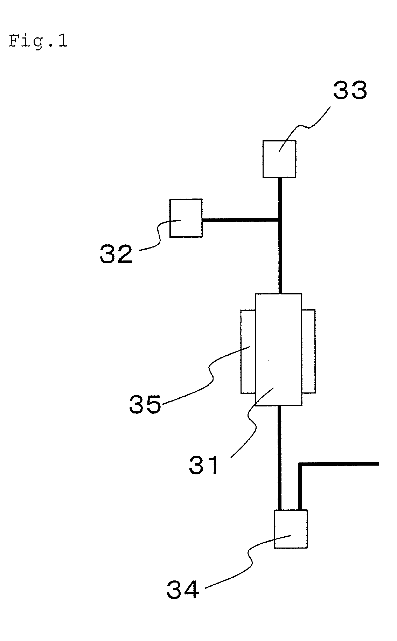

The results of studies made by the inventors relating to the factors of deterioration of the catalyst upon supplying only the raw material to the interior of the apparatus and the countermeasures therefor will be described with reference to Figs. 1 to 3.

### 1. Influence of Gas Species supplied

The inventors studied influence of the gas species supplied and the temperature on the catalyst characteristics by using a catalyst characteristics evaluation apparatus of a fixed bed passage type. Fig. 1 is a structural illustration of the catalyst characteristics evaluation apparatus of a fixed bed passage type. The catalyst characteristics evaluation apparatus shown in Fig. 1 has a reaction tube 31, a cooling fan and an electric furnace 35 (the detailed structures of the apparatus are omitted). A commercially available Ni catalyst (produced by Sud-Chemie Catalysts, Inc.) was used as the reforming catalyst. 3 cc of the Ni catalyst was charged in the reaction tube 31, steam was supplied from a steam supplying device 32, and the raw material was supplied from a gas supplying device 33. After removing water content in the gas having passed through the reaction tube 31 with a condenser 34, the gas components were analyzed with gas chromatography.

Detailed description of the analysis of the gas components with gas chromatography is omitted since it is an ordinary analysis method. The steam supplying device 32 is so constituted that steam can be supplied from ion exchanged water with a double plunger pump and a carburetor. The gas supplying device 33 is so constituted that methane or a mixed gas having city gas formulation (methane: 89.4% by volume, ethane: 5.8% by volume, propane: 3.2% by volume, n-butane: 1.6% by volume) can be supplied with a mass flow controller.

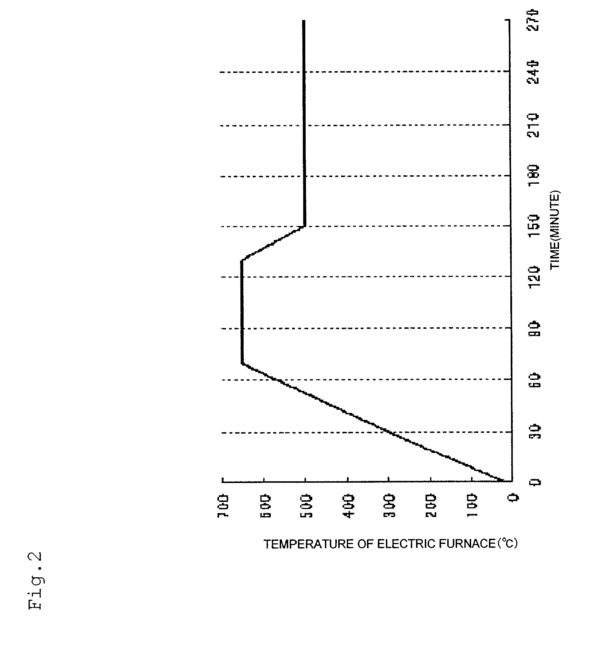

The inventors then studied influence of the gas species supplied based on Fig. 2. Fig. 2 is a diagram showing the temperature control of the electric furnace 35. While passing the mixed gas having city gas formulation at 200 cc/min, the temperature of the electric furnace was increased from room temperature to 300°C, and thereafter, steam is started to be supplied, and the temperature of the electric furnace was increased to 650°C, which fell within the temperature range that is ordinarily used as the controlled temperature of the reforming device. The state where the temperature of the electric furnace was 650°C was maintained for two hours. According to the operation, the interior of the reaction tube 31 was a hydrogen-containing gas atmosphere equivalent to the state immediately after stopping the ordinary hydrogen generating apparatus, and thereafter, the mixed gas having city gas formulation and steam were continuously supplied, and the temperature of the electric furnace was lowered to 500°C, for measuring the initial activity of the catalyst. The activity referred herein means a methane conversion (%), and the methane conversion is calculated by ((methane amount in raw material) - (unreacted methane amount)) x 100 / (methane amount in raw material).

In the case of studying the influence on the catalyst characteristics upon supplying only the mixed gas having city gas formulation to the reaction tube, after measuring the activity of the catalyst, the passage of the mixed gas having city gas formulation is continued while performing an intermittent steam supplying operation, in which steam is supplied intermittently by 5 minutes, for 120 minutes. In the case of studying the influence on the catalyst characteristics upon supplying only methane to the reaction tube, after measuring the activity of the catalyst, the gas species is switched to methane for passing methane within the period of 5 minutes where supply of steam is stopped in the intermittent steam supplying operation, and the gas species is switched from methane gas to the mixed gas having city gas formulation for passing the mixed gas within the period of 5 minutes where supply of steam is performed.

The operations are preformed since the states (formulations) of the atmospheric gas in the reaction tube are made equal to each other in the period before supplying only the mixed gas having city gas formulation or methane, thereby clarifying the difference in influence on the catalyst characteristics between the case where only the mixed gas having city gas formulation is supplied and the case where only methane is supplied.

The mixed gas having city gas formulation and steam were supplied for 5 minutes in the final step of the intermittent steam supplying operation for 120 minutes, and after completing the final step, the activity (conversion) of the catalyst was again measured, thereby evaluating the extent of lowering of the activity of the catalyst upon supplying only the mixed gas having city gas formulation and the extent of lowering of the activity of the catalyst upon supplying only methane.

Studies where the temperature upon performing the above intermittent steam supplying operation was 400°C or 300°C were also performed under the same conditions for the other factors (descriptions for the catalyst characteristics evaluation sequence are omitted).

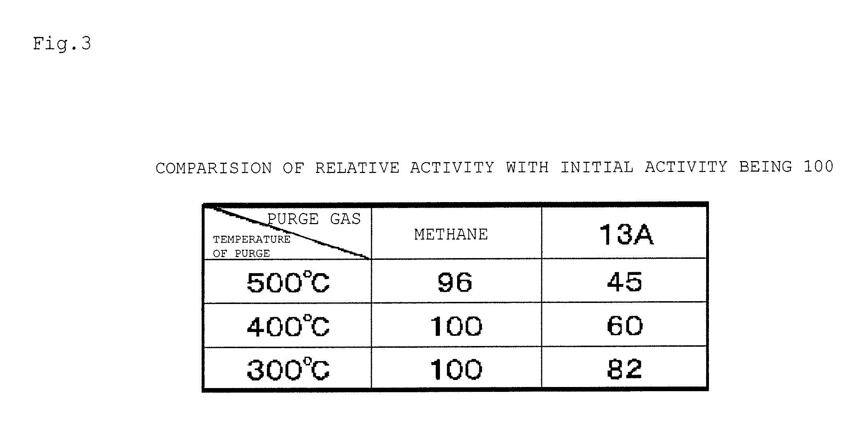

Fig. 3 is a diagram showing the catalyst activities after performing the intermittent steam supplying operation for 120 minutes with the initial catalyst activity being 100. It is understood from the results in the figure that in the case where only methane is passed through the reaction tube 31 containing the reforming catalyst, reduction in activity is hard to occur, and thus methane is preferable to the city gas (13A) as the gas species supplied upon supplying only the raw material to the reforming device. It is also understood that in the case where only the raw material is supplied to the reaction tube 31, the activity of the catalyst is more suppressed from being lowered when the temperature of the reaction tube 31 is lower. For example, it is understood that in the case where the hydrocarbon component in the gas supplied to the reaction tube 31 contains only methane, the activity of the catalyst is not lowered when the temperature of the reaction tube 31 is 400°C or less.

### 2. Studies on Hydrocarbon Removing Agent

The inventors studied the hydrocarbon removing agent for removing the hydrocarbon component in the raw material.

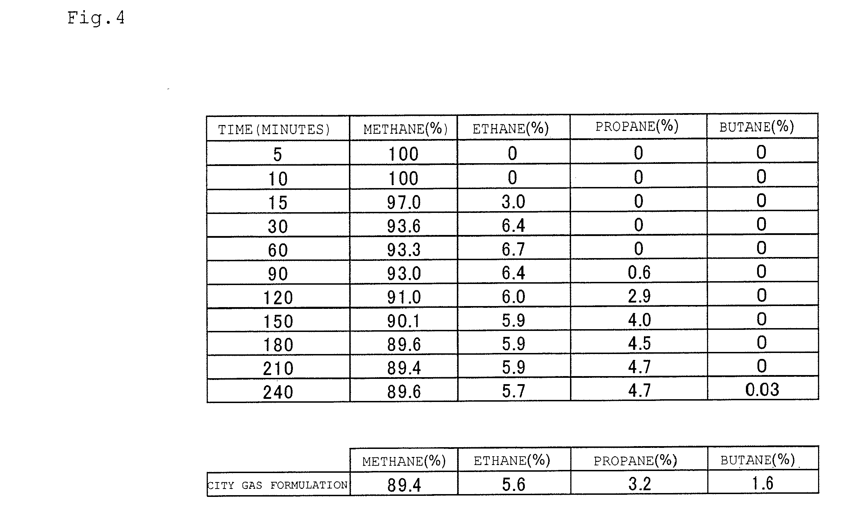

Unused Y-type zeolite (produced by Tosoh Corporation) was used as the hydrocarbon removing agent. The hydrocarbon removing characteristics were evaluated as follows. Approximately 400 g (dry weight) of the hydrocarbon removing agent was charged in a cylindrical container (inner diameter: approximately 40 mm), a city gas (13A supplied by Osaka Gas Co., Ltd.) was passed at 2 L/min as the raw material through the cylindrical container, and the time-lapse change of the formulation of the outlet gas was measured with gas chromatography. Fig. 4 is a diagram showing an example of the evaluation result and an example of analysis of the formulation of the city gas (13A).

After starting passage of the city gas, the component having a long C chain was adsorbed to the hydrocarbon removing agent, and a gas containing only methane was obtained. After further continuing the gas passage, gas components, i.e., ethane, propane and butane, were detected in this order. Accordingly, it was understood that a methane-rich gas was obtained by passing the city gas (13A) through the hydrocarbon removing device having the hydrocarbon removing agent charged therein. Upon assuming that the hydrogen generating apparatus is started and stopped once per day and has a system requiring 2 L of a raw material for raw material purge upon stopping the hydrogen generating apparatus, it is understood from Fig. 4 that the hydrocarbon components other than methane (i.e., the components having 2 or more carbon chain) are removed for 10 days. Butane having the longest carbon chain can be removed for approximately 240 days.

The present disclosure is developed based on the aforementioned results of measurements and studies, and the hydrogen generating apparatus according to the 1^{st} aspect of the present disclosure contains: a hydrogen generating device containing a reforming device that generates a hydrogen-containing gas from a raw material containing a sulfur component and a hydrocarbon component; a desulfurizing device that removes the sulfur component in the raw material by passing the raw material therethrough; a hydrocarbon removing device that removes a part of the hydrocarbon component in the raw material by passing the raw material therethrough, on an upstream side or a downstream side of the desulfurizing device; a first raw material supplying path that passes the raw material through only the desulfurizing device among the desulfurizing device and the hydrocarbon removing device, and flows the raw material into the hydrogen generating device; a second raw material supplying path that passes the raw material through the desulfurizing device and the hydrocarbon removing device, and flows the raw material into the hydrogen generating device; a flow path switching device that switches a flow path of the raw material between the first raw material supplying path and the second raw material supplying path; and a controlling device that controls operation of the flow path switching device, and **characterized in that** the controlling device switches the flow path of the raw material to the second raw material supplying path with the flow path switching device in an operating step of supplying only the raw material to the hydrogen generating device.

According to the constitution, the raw material can be flown through the hydrogen generating device after removing the component having a long C chain with the hydrocarbon removing device, and deterioration of the catalyst due to raw material purge can be suppressed. Furthermore, a hydrogen generating apparatus that is frequently started and stopped can be operated normally for a prolonged period of time.

The "raw material" referred to herein may be any type that contains a sulfur component and a hydrocarbon component, and a city gas, a natural gas, LPG or the like is employed.

The "desulfurizing device" referred to herein may be any type that can remove a sulfur component in the raw material, one using a hydrogenation desulfurizing method, one using a desulfurization method with an absorbent, or the like is employed.

The "reforming device" referred to herein may be one using any type of reforming reaction that can generate a hydrogen-containing gas from the raw material, steam reforming reaction, auto-thermal reaction or the like is employed.

The "hydrocarbon removing device" referred to herein may be any removing method that can remove a part of the hydrocarbon component in the raw material (specifically, a hydrocarbon component having a longer carbon chain than the hydrocarbon as the major component), and in an embodiment of the present disclosure, for example, such a type is employed that a part of the hydrocarbon component is removed by an adsorption method.

The "flow path switching device" referred to herein may have any structure that can switch the flow path of the raw material between the first raw material supplying path and the second raw material supplying path, and in an embodiment of the present disclosure, for example, such a structure is employed that has a three-way valve provided at the branching point of the first raw material supplying path and the second raw material supplying path, but such a structure may also be employed that has a first shutoff valve provided on the first raw material supplying path on the downstream side of the branching point, and a second shutoff valve provided on the second raw material supplying path on the downstream side of the branching point.

The language "switching the flow path of the raw material to the second raw material supplying path with the flow path switching device in an operating step of supplying only the raw material to the hydrogen generating device" includes the case where the flow path of the raw material is switched to the second raw material supplying path with the flow path switching device in at least one operating step among all the operating steps, and also includes the case where the flow path of the raw material is switched to the second raw material supplying path with the flow path switching device in a part of the duration of performing a prescribed operating step of supplying only the raw material. Specifically, in the case of a hydrogen generating apparatus that is so constituted that raw material purge, a pressure supplementing operation, and a temperature increasing operation are performed as the operating step of supplying only the raw material , it includes the case where the flow path of the raw material is switched to the second raw material supplying path in at least one operating step (for example, the raw material purge) among the three operating steps. The raw material purge is to purge at least the interior of the reformulating device with the raw material after stopping the hydrogen generating operation. The pressure supplementing operation is to supply the raw material for increasing the inner pressure, which had been decreased conforming to a fall in temperature after stopping the hydrogen generating operation. The temperature increasing operation is to increase the temperature of the hydrogen generating device by supplying the raw material gas having passed through the hydrogen generating device to the combustion device. It also includes the case where the flow path of the raw material is switched to the second raw material supplying path in at least a part of the duration of performing a prescribed operating step of supplying only the raw material to the hydrogen generating device (for example, the temperature increasing operation).

The "controlling device" referred to herein includes any one of an embodiment that is constituted by a single controlling device, and an embodiment that is constituted by distributed plural controlling units, which control the hydrogen generating apparatus in cooperation with each other.

The hydrogen generating apparatus according to the 2^{nd} aspect of the present disclosure is **characterized in that** the raw material contains methane and at least a hydrocarbon having two or more carbon chain.

The hydrogen generating apparatus according to the 3^{rd} aspect of the present disclosure is **characterized in that** the hydrocarbon removing device removes the hydrocarbon having two or more carbon chain.

According to the constitution, even when the raw material contains a hydrocarbon component having a longer C chain than methane, the raw material can be supplied to the hydrogen generating device after removing the hydrocarbon component having a longer C chain, and thus the reforming catalyst can be suppressed from being deteriorated in an operation of supplying only the raw material to the hydrogen generating device.

The hydrogen generating apparatus according to the 4^{th} aspect of the present disclosure is **characterized in that** the raw material contains propane and at least a hydrocarbon having four or more carbon chain.

The hydrogen generating apparatus according to the 5^{th} aspect of the present disclosure is **characterized in that** the hydrocarbon removing device removes the hydrocarbon having four or more carbon chain.

According to the constitution, even when the raw material contains a hydrocarbon component having a longer C chain than propane, the raw material can be supplied to the hydrogen generating device after removing the hydrocarbon component having a longer C chain, and thus the reforming catalyst can be suppressed from being deteriorated in an operation of supplying only the raw material to the hydrogen generating device.

The hydrogen generating apparatus according to the 6^{th} aspect of the present disclosure is **characterized in that** the hydrocarbon removing device contains a hydrocarbon removing agent containing zeolite.

The hydrogen generating apparatus according to the 7^{th} aspect of the present disclosure is **characterized in that** the hydrocarbon removing device contains a hydrocarbon removing agent containing activated carbon.

The hydrogen generating apparatus according to the 8^{th} aspect of the present disclosure is **characterized in that** the apparatus contains a first connecting device that connects the desulfurizing device and the first raw material supplying path, and a second connecting device that connects the hydrocarbon removing device and the second raw material supplying path, and the first connecting device and the second connecting device have compatibility with each other.

According to the constitution, in the case where the adsorption capability to hydrocarbon is decreased, the hydrocarbon removing device can be used as a desulfurizing device, thereby suppressing the cost.

The hydrogen generating apparatus according to the 9^{th} aspect of the present disclosure is **characterized in that** in a hydrogen generating operation in a starting process, the controlling device controls the flow path switching device to switch the flow path of the raw material to the first raw material supplying path.

Upon starting the reforming reaction, the raw material is subjected to the reforming reaction, and deposition of carbon from the raw material is suppressed. According to the aforementioned constitution, deposition of carbon from the raw material can be suppressed while suppressing utilization of the hydrocarbon removing device. The hydrogen generating operation referred to herein means an operation of supplying a reaction gas that is necessary for the reforming reaction, i.e., an operation of supplying the raw material and steam (water) in the case of the steam reforming reaction, or an operation of supplying the raw material, steam (water) and air in the case of the auto-thermal reaction.

The hydrogen generating apparatus according to the 10^{th} aspect of the present disclosure is **characterized in that** the apparatus contains a combustion device that heats the reforming device, the apparatus is so constituted that the raw material having passed through the hydrogen generating device in a starting process is combusted in the combustion device to perform a temperature increasing operation of heating the reforming device, and the controlling device, in the temperature increasing operation, controls the flow path switching device to switch the flow path of the raw material to the first raw material supplying path when the temperature of the reforming device is less than a first threshold value, and controls the flow path switching device to switch the flow path of the raw material to the second raw material supplying path when the temperature of the reforming device is the first threshold value or more.

According to the constitution, in the temperature increasing operation of the reforming device, deposition of carbon from the raw material can be suppressed while decreasing the amount of the raw material passing through the hydrocarbon removing device as compared to the case of controlling the flow path of the raw material consistently to the second raw material supplying path.

The hydrogen generating apparatus according to the 11^{th} aspect of the present disclosure is
**characterized in that** the apparatus is so constituted that a pressure supplementing operation of supplying the raw material to the hydrogen generating device is performed to increase the pressure inside the hydrogen generating device, which had been decreased after stopping a hydrogen generating operation, and the controlling device, in the pressure supplementing operation, controls the flow path switching device to switch the flow path of the raw material to the second raw material supplying path.

According to the constitution, the raw material having passed through the hydrocarbon removing device is supplied to the hydrogen generating device in the pressure supplementing operation, and thus the catalyst can be suppressed from being deteriorated as compared to the conventional art. The language "controlling the flow path of the raw material to the second raw material supplying path in the pressure supplementing operation" does not mean that the flow path of the raw material is controlled to the second raw material supplying path over the entire raw material supplying operation in the pressure supplementing operation, but means that the flow path of the raw material is controlled to the second raw material supplying path in at least a part of the supplying operation in the entire raw material supplying operation. Specifically, in the case where the raw material supplying operation is performed intermittently at a plurality of times (for example, six times in total), it means that the flow path of the raw material is controlled to the second raw material supplying path in at least a part of the plurality of times (for example, the first to third operations).

The hydrogen generating apparatus according to the 12^{th} aspect of the present disclosure is **characterized in that** the apparatus is so constituted that raw material purge of purging an interior of the hydrogen generating device with the raw material is performed after stopping a hydrogen generating operation, and the controlling device, in the raw material purge, controls the flow path switching device to switch the flow path of the raw material to the second raw material supplying path.

According to the constitution, the raw material having passed through the hydrocarbon removing device is supplied to the hydrogen generating device in the raw material purge, and thus the catalyst can be suppressed from being deteriorated as compared to the conventional art.

The hydrogen generating apparatus according to the 13^{th} aspect of the present disclosure is **characterized in that** the apparatus is so constituted that a pressure supplementing operation of supplying the raw material to the hydrogen generating device is performed to increase the pressure inside the hydrogen generating device, which had been decreased after stopping a hydrogen generating operation, and is so constituted that raw material purge of purging an interior of the hydrogen generating device with the raw material is performed after stopping a hydrogen generating operation, and the controlling device, in at least one of the pressure supplementing operation and the raw material purge, controls the flow path switching device to switch the flow path of the raw material to the first raw material supplying path when the temperature of the reforming device is less than a second threshold value, and controls the flow path switching device to switch the flow path of the raw material to the second raw material supplying path when the temperature of the reforming device is the second threshold value or more.

According to the constitution, deposition of carbon from the raw material can be suppressed while decreasing the amount of the raw material passing through the hydrocarbon removing device to extend the service life of the hydrocarbon removing device, as compared to the hydrogen generating apparatus according to the 11^{th} aspect of the present disclosure. The language "in at least one of the pressure supplementing operation and the raw material purge, controlling the flow path switching device to switch the flow path of the raw material to the first raw material supplying path when the temperature of the reforming device is less than a second threshold value" includes the case where the flow path switching device is controlled to switch the flow path of the raw material to the first raw material supplying path in at least a part of the supplying operation in the entire raw material supplying operation in the pressure supplementing operation. It also contains the case where the flow path switching device is controlled to switch the flow path of the raw material to the first raw material supplying path in at least a part of the operation duration in the entire operation duration of the raw material purge operation.

A fuel cell system according to the 14^{th} aspect of the present disclosure contains the hydrogen generating apparatus of the present disclosure and a fuel cell that uses the hydrogen-containing gas sent from the hydrogen generating apparatus as a fuel.

The "fuel cell" referred to herein may be any type of a fuel cell, and for example a solid polymer fuel cell, a phosphoric acid fuel cell, a solid oxide fuel cell or the like is employed.

A method for operating a hydrogen generating apparatus according to the 15^{th} aspect of the present disclosure is a method for operating a hydrogen generating apparatus containing: a hydrogen generating device containing a reforming device that generates a hydrogen-containing gas from a raw material containing a sulfur component and a hydrocarbon component; a desulfurizing device that removes the sulfur component in the raw material by passing the raw material therethrough; a hydrocarbon removing device that removes a part of the hydrocarbon component in the raw material by passing the raw material therethrough, on an upstream side or a downstream side of the desulfurizing device; a first raw material supplying path that passes the raw material through only the desulfurizing device among the desulfurizing device and the hydrocarbon removing device, and flows the raw material into the hydrogen generating device; a second raw material supplying path that passes the raw material through the desulfurizing device and the hydrocarbon removing device, and flows the raw material into the hydrogen generating device; and a flow path switching device that switches a flow path of the raw material between the first raw material supplying path and the second raw material supplying path, and the method contains a step of switching the flow path of the raw material to the second raw material supplying path with the flow path switching device in an operating step of supplying the raw material to the hydrogen generating device.

According to the constitution, the reforming catalyst is suppressed from being deteriorated in the operating step of supplying only the raw material to the hydrogen generating apparatus, as compared to the conventional art.

The method for operating a hydrogen generating apparatus according to the 16^{th} aspect of the present disclosure is **characterized in that** in a hydrogen generating operation in a starting process, the flow path switching device is controlled to switch the flow path of the raw material to the first raw material supplying path.

The method for operating a hydrogen generating apparatus according to the 17^{th} aspect of the present disclosure is **characterized in that** the hydrogen generating apparatus contains a combustion device that heats the reforming device, the apparatus is so constituted that the raw material having passed through the hydrogen generating device is combusted in the combustion device to perform a temperature increasing operation of heating the reforming device in a starting process, and in the temperature increasing operation, the flow path switching device is controlled to switch the flow path of the raw material to the first raw material supplying path when the temperature of the reforming device is less than a first threshold value, and the flow path switching device is controlled to switch the flow path of the raw material to the second raw material supplying path when the temperature of the reforming device is the first threshold value or more.

The method for operating a hydrogen generating apparatus according to the 18^{th} aspect of the present disclosure is **characterized in that** the hydrogen generating apparatus is so constituted that a pressure supplementing operation of supplying the raw material to the hydrogen generating device is performed to increase the pressure inside the hydrogen generating device, which had been decreased after stopping a hydrogen generating operation, and in the pressure supplementing operation, the flow path switching device is controlled to switch the flow path of the raw material to the second raw material supplying path.

The method for operating a hydrogen generating apparatus according to the 19^{th} aspect of the present disclosure is **characterized in that** the hydrogen generating apparatus is so constituted that raw material purge of purging an interior of the hydrogen generating device with the raw material is performed after stopping a hydrogen generating operation, and in the raw material purge, the flow path switching device is controlled to switch the flow path of the raw material to the second raw material supplying path.

The method for operating a hydrogen generating apparatus according to the 20^{th} aspect of the present disclosure is **characterized in that** the hydrogen generating apparatus is so constituted that a pressure supplementing operation of supplying the raw material to the hydrogen generating device is performed to increase the pressure inside the hydrogen generating device, which had been decreased after stopping a hydrogen generating operation, and is so constituted that raw material purge of purging an interior of the hydrogen generating device with the raw material is performed after stopping a hydrogen generating operation, and in at least one of the pressure supplementing operation and the raw material purge, the flow path switching device is controlled to switch the flow path of the raw material to the first raw material supplying path when the temperature of the reforming device is less than a second threshold value, and the flow path switching device is controlled to switch the flow path of the raw material to the second raw material supplying path when the temperature of the reforming device is the second threshold value or more.

Embodiments of the hydrogen generating apparatus and the fuel cell system having the same according to the present disclosure will be described below more specifically with reference to the drawings.

### Embodiment 1

### Constitution of Fuel Cell System 200

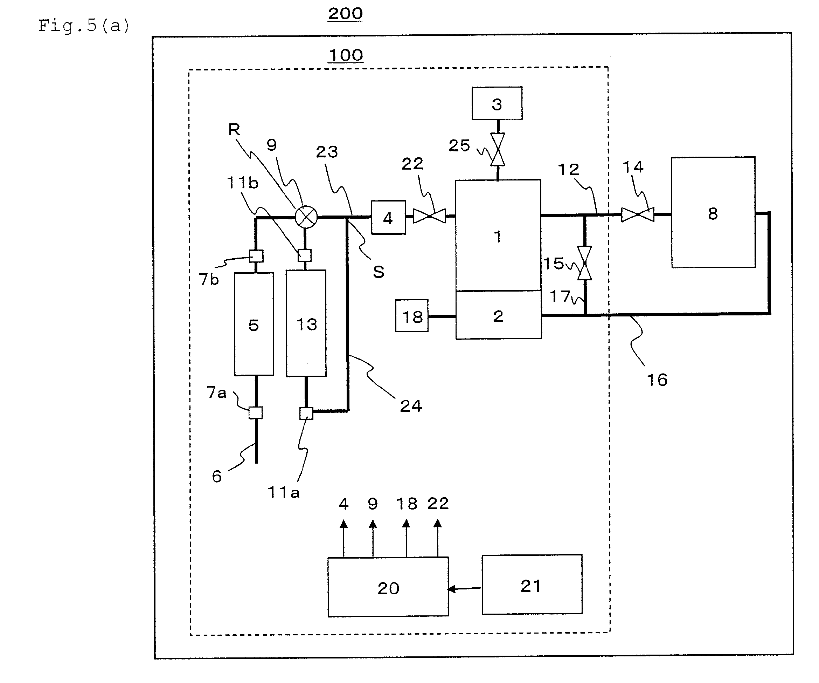

Fig. 5(a) is a constitutional illustration of a hydrogen generating apparatus 100 and a fuel cell system 200 having the same in the embodiment 1 of the present disclosure. The fuel cell system 200 according to the embodiment contains a hydrogen generating apparatus 10 that performs mainly reforming reaction of a raw material containing methane as a major component and a hydrocarbon component containing a hydrocarbon having 2 or more carbon chain with steam to generate a hydrogen-containing gas, and a solid polymer fuel cell 8 that generates electric power with the hydrogen-containing gas sent from the hydrogen generating apparatus 10 through a hydrogen-containing gas supplying path 12. As above raw materials, city gas, natural gas are exemplified. The fuel cell 8 is substantially equivalent to solid polymer type, phosphoric acid type and solid oxide type fuel cells ordinarily employed, and detailed descriptions for the structures thereof are omitted herein.

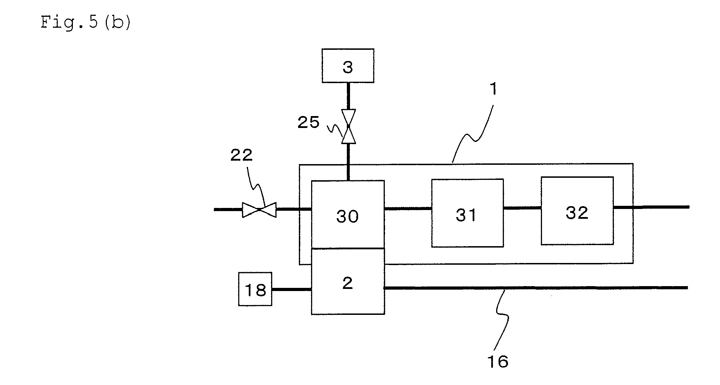

The hydrogen generating apparatus 10 has a hydrogen generating device 1 that performs reforming reaction of steam. Fig. 5(b) is a constitutional illustration of the hydrogen generating device 1. As shown in Fig. 5(b), the hydrogen generating device 1 has a reforming device 30 that performs reforming reaction of the raw material and steam, a modifying device 31 that performs modification reaction of carbon monoxide in the hydrogen-containing gas generated in the reforming device 30, and steam and an oxidizing device 32 that oxidizes carbon monoxide remaining in the hydrogen-containing gas after passing through the modifying device 31 for reducing carbon monoxide.

The reforming device 30 has a reforming catalyst. A Ni catalyst is used therefor in the embodiment 1, and such a catalyst as a noble metal catalyst, e.g., platinum (Pt), ruthenium (Ru) and rhodium (Rh), may be used. The modifying device 31 has a modification catalyst. A copper-zinc (Cu-Zn) catalyst is used therefor in the embodiment 1, and such a catalyst as a noble metal catalyst, e.g., Pt, Ru and Rh, and an iron-chromium (Fe-Cr) catalyst may be used. The oxidizing device 32 has an oxidation catalyst. A Ru catalyst is used as the oxidation catalyst, and a Pt catalyst and the like may be used. The constitutions of the hydrogen generating device 1 relating to generation of hydrogen-containing gas with the reforming device 30, the modifying device 31, the oxidizing device 32 and the like are substantially equivalent to a hydrogen generating apparatus used in an ordinary fuel cell system, and detailed descriptions for the constitutions thereof are omitted.

In the embodiment, such a constitution is employed that the hydrogen generating device 1 contains therein the reforming device 30, the modifying device 31 and the oxidizing device 32, but the modifying device 31 and the oxidizing device 32 may not be provided in the case where the carbon monoxide concentration in the hydrogen-containing gas generated in the reforming device 30 is low, and depending on the allowable value of the carbon monoxide concentration of devices, to which the hydrogen-containing gas is supplied.

In the embodiment 1, an infrastructure line of city gas (13A supplied by Osaka Gas Co., Ltd.) is used as a supplying source of the raw material, as shown in Fig. 5(a). The hydrogen generating apparatus 100 of the embodiment 1 has a first raw material supplying path 23 connected to the infrastructure line of gas, and a desulfurizing device 5 is connected to the first raw material supplying path 23 through a first connecting device 7a and a first connecting device 7b. The desulfurizing device 5 is connected to the hydrogen generating device 1 through the first raw material supplying path 23.

A flow path switching device 9 is provided on the first raw material supplying path 23. A second raw material supplying path 24 branched from the first raw material supplying path 23 is connected to the flow path switching device 9, and a hydrocarbon removing device 13 is connected to the second raw material supplying path 24 through a second connecting device 11a and a second connecting device 11b. The second raw material supplying path 24 is branched from the first raw material supplying path 23 at the upstream end thereof and is connected to the first raw material supplying path 23 at the downstream end thereof. The "first raw material supplying path that passes the raw material through only the desulfurizing device among the desulfurizing device and the hydrocarbon removing device, and flows the raw material into the hydrogen generating device" is constituted by the first raw material supplying path 23. The "second raw material supplying path that passes the raw material through the desulfurizing device and the hydrocarbon removing device, and flows the raw material into the hydrogen generating device" is constituted by the first raw material supplying path 23 on the upstream side of the branching part R, the second raw material supplying path 24 and the first raw material supplying path 23 on the downstream side of a connecting part S to the downstream end of the second raw material supplying path 24. However, the "first raw material supplying path" and the "second raw material supplying path" are not limited to the flow path constitution of the embodiment.

According to the aforementioned constitution, it is so constituted that the raw material having passed through the desulfurizing device 5 can be flown to the hydrogen generating device 1 through the hydrocarbon removing device 13 by switching the flow path switching device 9 to the second raw material supplying path 24. In the alternative, the raw material can be flown directly to the hydrogen generating device 1 without passing through the hydrocarbon removing device 13 by switching the flow path switching device 9 to the first raw material supplying path 23.

The desulfurizing device 5 contains charged therein a zeolite adsorption removing agent that adsorbs and removes an odorant in the city gas, and the desulfurizing device 5 is connected detachably to the first raw material supplying path 23 through the first connecting devices 7a and 7b disposed before and after the same.

The hydrocarbon removing device 13 contains charged therein zeolite (Y-type zeolite in the embodiment) as a hydrocarbon removing agent that adsorbs and removes a part of a hydrocarbon, and the hydrocarbon removing device 13 is connected detachably to the second raw material supplying path 24 through the second connecting devices 11a and 11b provided before and after the same. The hydrocarbon removing device 13 may remove not only the hydrocarbon but also a sulfur component and the like capable of deteriorating the catalyst, and in the case where biogas containing methane as a major component is used as the raw material, such an embodiment may be employed that a hydrocarbon removing agent capable of removing a siloxane contained therein is used. In the case where the hydrocarbon removing device 13 contains a hydrocarbon removing agent capable of removing a sulfur component (for example, zeolite having desulfurizing function), the second connecting devices 11a and 11b provided on the hydrocarbon removing device 13 have compatibility with the first connecting devices 7a and 7b provided on the desulfurizing device 5, whereby the hydrocarbon removing device 13 can be used as the desulfurizing device 5, and after the hydrocarbon removing device 13 is lowered in capability of removing a hydrocarbon, the hydrocarbon removing device 13 can be utilized as a desulfurizing device. Y-type zeolite is used as the hydrocarbon removing agent in the above description, but other embodiments may be employed that other type of zeolite having a property absorbing hydrocarbon components, activated carbon and the like are utilized.

On the first raw material supplying path 23, a first shutoff valve 22 that opens and shuts off the same is provided, and on the hydrogen-containing gas supplying path 12, a second shutoff valve 14 that opens and shuts off the same is provided. A bypass flow path 17 that is branched from the hydrogen-containing gas supplying path 12 and bypasses the fuel cell 8, and a third shutoff valve 15 that opens and shuts off the same are provided.

The hydrogen generating apparatus 100 has a water supplying device 3 that supplies water to the hydrogen generating device 1 and a raw material supplying device that controls the flow amount of the raw material supplied to the hydrogen generating device 1. The raw material supplying device 4 herein is a booster pump, which is so constituted that the flow amount can be controlled by controlling, for example, an input electric current pulse, an input electric power or the like. As the water supplying device 3, a pump having a flow amount controlling capability is used as similar to the raw material supplying device 4. However, both the water supplying device 3 and the raw material supplying device 4 are not limited to the above as far as the flow amount of the fluid (i.e., the raw material and water) can be controlled, and such an embodiment may be employed that a flow amount controlling valve is used solely, or such an embodiment may be employed that is constituted by containing a flow amount controlling valve and a pump.

The hydrogen generating apparatus 10 is equipped with a combusting device 2, which is a burner that supplies reaction heat required for the reforming reaction in the hydrogen generating device 1, and a combustion fan 18 that supplies air for combustion to the combusting device 2. As shown in Fig. 5(b), heat from the combustion waste gas discharged from the combusting device 2 is supplied to the reforming device 30, and heat is supplied to the modifying device 31 and the oxidizing device 32 with passage of the high temperature gas sent from the reforming device 30.

An off-gas flow path 16 is provided, in which a hydrogen off-gas is discharged from an anode gas flow path (which is not shown in the figure) of the fuel cell 8 and is supplied to the combusting device 2, and the downstream end of the bypass flow path 17 consist of it to be connected to the off-gas flow path 16.

A controlling device 20 is provided that controls the supplied amount of the raw material supplied from the raw material supplying device 4, the supplied amount of water supplied from the water supplying device 3, and the like, and controls the operation of hydrogen-containing gas generation of the hydrogen generating device 1, and the operation of electric power generation of the fuel cell 8. The controlling device 20 uses a semiconductor memory and CPU, stores the operation information of the fuel cell system 200, such as the operation controlling sequence and the accumulated flow amount of the raw material, calculates the suitable operation conditions corresponding to the situation, and instructs the operation conditions necessary for operating the water supplying device 3, the raw material supplying device 4 and the like. An inputting device 21 for inputting the operation instruction signals of the fuel cell system 200, the exchanging signal of the desulfurizing device 5, and the like is connected thereto. The constitution of the inputting device 21 is substantially equivalent to an inputting device that is ordinarily employed, and detailed description thereof is omitted.

### Operation of Fuel Cell System 200

An example of an operating method of the hydrogen generating apparatus 100 and the fuel cell system 200 having the same according to the embodiment 1 of the present disclosure will be described.

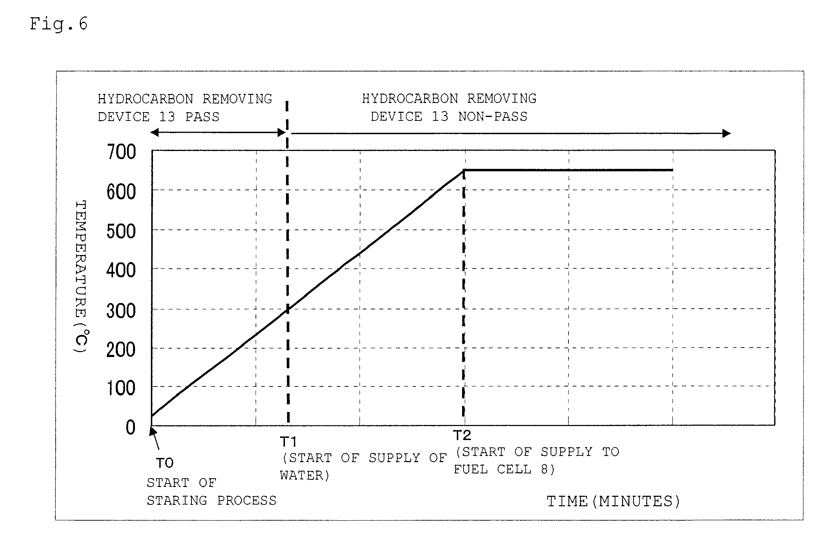

The starting process of the fuel cell system 200 according to the embodiment 1 of the present disclosure will be described with reference to Figs. 5 and 6.

Fig. 6 is a diagram showing temperature change of the reforming device 30 in the starting process of the hydrogen generating apparatus 100 according to the embodiment 1.

The starting process of the hydrogen generating apparatus 100 is started by an instruction from the controlling device 20, and the flow path switching device 9 is switched to the second raw material supplying path 24 (see Fig. 5 and T0 in Fig. 6). Subsequently, the first shutoff valve 22 is opened, and the raw material supplying device 4 is driven, thereby supplying the raw material from the infrastructure line of gas to the hydrogen generating apparatus 100. The raw material supplied from the infrastructure line of gas is passed through the desulfurizing device 5 and the hydrocarbon removing device 13 and introduced into the hydrogen generating device 1. The raw material discharged from the hydrogen generating device 1 is supplied to the combusting device 2 through the bypass flow path 17 and the off-gas flow path 16 since the second shutoff valve 14 is closed, and the third shutoff valve 15 is opened. The combusting device 2 starts heating (temperature increasing operation) by igniting the raw material supplied.

In the case where the temperature of the reforming device 30 reaches the first temperature (for example, 300°C) or more by this heating, the controlling device 20 opens the fourth shutoff valve 25 and drives the water supplying device 3 to supply water to the hydrogen generating device 1, and switches the flow path switching device 9 to the first raw material supplying path 23. By the switching operation, the raw material having passed through the desulfurizing device 5 is supplied directly to the hydrogen generating device 1 without passing through the hydrocarbon removing device 13 (see T1 in Fig. 6). The reforming reaction is started by supplying water and the raw material. The "first temperature" herein is defined as a temperature, at which the reforming reaction using steam can be started. The flow path control for the raw material in the temperature increasing process from the start of temperature increase of the hydrogen generating device 1 to the start of supply of water to the hydrogen generating device 1 corresponds to an example of the "first passage process", and the flow path control for the raw material in the temperature increasing process subsequent to the start of supply of water to the hydrogen generating device 1 corresponds to an example of the "second passage process".

In the embodiment 1, city gas (13A) containing methane as a major component is used as the raw material. Water is supplied from the water supplying device 3 in such an amount that approximately 3 mol of steam is present per 1 mol of carbon atoms in the average molecular formula of the city gas supplied (approximately 3 in terms of steam/carbon (S/C) ratio). In the hydrogen generating device 1, the steam reforming reaction, modification reaction and oxidizing reaction of carbon monoxide are performed, thereby generating a hydrogen-containing gas having a carbon monoxide concentration of approximately 20 ppm (volume concentration) or less.

When the temperature of the reforming device 30 reaches 650°C by the temperature increasing operation, the controlling device 20 shuts off the third shutoff valve 15 and opens the second shutoff valve 14 to switch to the side of the fuel cell 8. By the switching operation, the hydrogen-containing gas generated in the hydrogen generating device 1 is sent to the fuel cell 8 through the hydrogen-containing gas supplying path 12. At this time, the operation of the raw material supplying device 4 is controlled by the controlling device 20, thereby supplying the raw material to the hydrogen generating device 1 in such an amount that is determined in advance corresponding to the electric power generation amount, and thus the amount of the hydrogen-containing gas sent to the fuel cell 8 is controlled. This is an electric power generation operation that is substantially the same as a fuel cell system ordinarily employed, and detailed descriptions thereof are omitted.

As described above, in the starting process of the hydrogen generating apparatus 100, the flow path switching device is switched to the side of "first raw material supplying path" from the start of the temperature increasing operation of the hydrogen generating device 1 to the start of supply of water (supply of steam) to the hydrogen generating device 1, whereby the raw material is passed through the hydrocarbon removing device 13, thereby supplying the raw material having been decreased in the hydrocarbon having a longer carbon chain than methane to the reforming device 30, and thus deterioration of the catalyst (reforming catalyst) due to deposition of carbon from the hydrocarbon having a longer chain than methane can be suppressed.

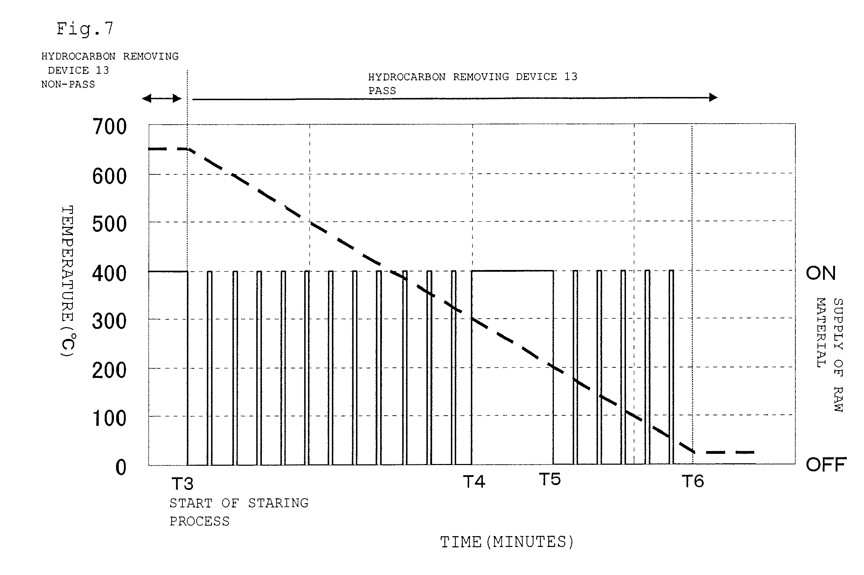

The stopping process of the fuel cell system 200 according to the embodiment 1 of the present disclosure will be described with reference to Figs. 5 and 7.

Fig. 7 is a diagram showing a graph of temperature change of the reforming device 30 and the on/off state of the raw material supplying device 4 after stopping the hydrogen generating operation of the hydrogen generating apparatus 100 according to the embodiment 1. The stop of the hydrogen generating operation referred herein means stop of the supplying operation of the reaction gases (i.e., the raw material and steam) required for the reforming reaction to the hydrogen generating device 1.

Upon stopping the electric power generation operation of the fuel cell system 200, supply of the raw material and water is stopped with the controlling device 20 to stop the hydrogen generating operation of the hydrogen generating apparatus 100, and the temperatures of the catalyst beds of the reforming device 30, the modifying device 31 and the oxidizing device 32 in the hydrogen generating device 1 are decreased (see T3 in Fig. 7). The controlling device 20 shuts off the first shutoff valve 22, the second shutoff valve 14, the third shutoff valve 15 and the fourth shutoff valve 25 to seal off the hydrogen generating device 1, and switches the flow path switching device 9 to the second raw material supplying path 24.

The hydrogen generating device 1 is sealed off by shutting off the reaction gas flow path (the raw material flow path and the water flow path) on the upstream side of the hydrogen generating device 1 and the shutoff valve 14 provided on the hydrogen-containing gas flow path 12 on the downstream side thereof. When the temperature inside the hydrogen generating device is decreased in the sealed state, the inner pressure of the hydrogen generating device is decreased, and the negative pressure further proceeds to cause a possibility of invasion of air into the hydrogen generating device 1. Accordingly, the raw material is supplemented into the hydrogen generating device 1 by opening the first shutoff valve 22 intermittently, so as to increase the pressure, which had been decreased in the hydrogen generating device 1 (which is hereinafter referred to as a pressure supplementing operation), thereby preventing invasion of air into the hydrogen generating device 1 due to proceed of negative pressure. At this time, the flow path switching device 9 is switched to the first raw material supplying path 24, and thus the raw material having passed through the hydrocarbon removing device 13 is supplemented to the hydrogen generating device 1. The pressure supplementing operation in the state where the flow path of the raw material is switched to the first raw material supplying path 23 with the flow path switching device 9 is performed in the duration from the stop of the hydrogen generating operation to the start of raw material purge, which is described later (T3 to T4 in Fig. 7). The flow path control for the raw material in the pressure supplementing operation in the duration from T3 to T4 corresponds to an example of the "passage process A".

After decreasing the temperatures of the catalyst beds to the fourth temperature, the controlling device 20 opens the first shutoff valve 22 and the third shutoff valve 15 and drives the raw material supplying device 4, whereby the raw material having passed through the desulfurizing device 5 and the hydrocarbon removing device 13 is passed through the hydrogen generating device 1, thereby substituting the hydrogen-containing gas accumulated in the gas flow path of the hydrogen generating device 1 by the raw material (raw material purge). The fourth temperature is designated as a temperature, at which the raw material purge can be performed, and in the hydrogen generating apparatus 100 of the embodiment, it is set at 300°C as shown in Fig. 7. The flow path control for the raw material in the raw material purge corresponds to an example of the "passage process B". The raw material purge is performed at least for such a period of time that is required at least for substituting the interior of the reforming device 30 with the raw material, and the duration from T4 to T5 in Fig. 7 corresponds to an example of the required period of time.

The hydrogen-containing gas scavenged from the interior of the hydrogen generating device 1 by the raw material purge is subjected to a combustion process in the combusting device 2. Furthermore, in the raw material purge, such an embodiment may be employed that the second shutoff valve 14 is simultaneously opened, whereby the hydrogen-containing gas remaining in the anode gas flow path in the fuel cell 8 is substituted by the raw material as similar to the hydrogen generating device 1.

Thereafter, controlling device 20 stops the operation of the raw material supplying device 4 and shuts off the first shutoff valve 22 and the third shutoff valve 15, whereby the raw material purge is completed, and the hydrogen generating device 1 is sealed off. Thereafter, the controlling device 20 opens the first shutoff valve 22 intermittently to supplement the raw material to the hydrogen generating device 1, thereby preventing negative pressure inside the hydrogen generating device 1 from proceeding, within the period until the temperature of the reforming device 30 is decreased to room temperature (T5 to T6 in Fig. 7). The flow path control for the raw material in the pressure supplementing operation after completing the raw material purge corresponds to an example of the "passage process C". After the temperature of the reforming device 30 reaches room temperature, the pressure supplementing operation is stopped.

As described above, the fuel cell system 200 of the embodiment 1 is so constituted that the raw material, which has been decreased in the hydrocarbon having a longer carbon chain than methane by passing through the hydrocarbon removing device 13, is supplied to the reforming device 30 in the raw material purge and the pressure supplementing operation, whereby deterioration of the catalyst (reforming catalyst) due to deposition of carbon from the hydrocarbon having a longer carbon chain than methane can be suppressed.

The hydrogen generating apparatus and the fuel cell system having the same according to the embodiment are so constituted that the pressure supplementing operation and raw material purge are performed after stopping the hydrogen generating operation of the hydrogen generating apparatus, but such an embodiment may be employed that one of the operations is performed, and the flow path control for the raw material is performed in the operating step performed.

### Modified Example 1

A hydrogen generating apparatus and a fuel cell system having the same according to a modified example 1 will be described.

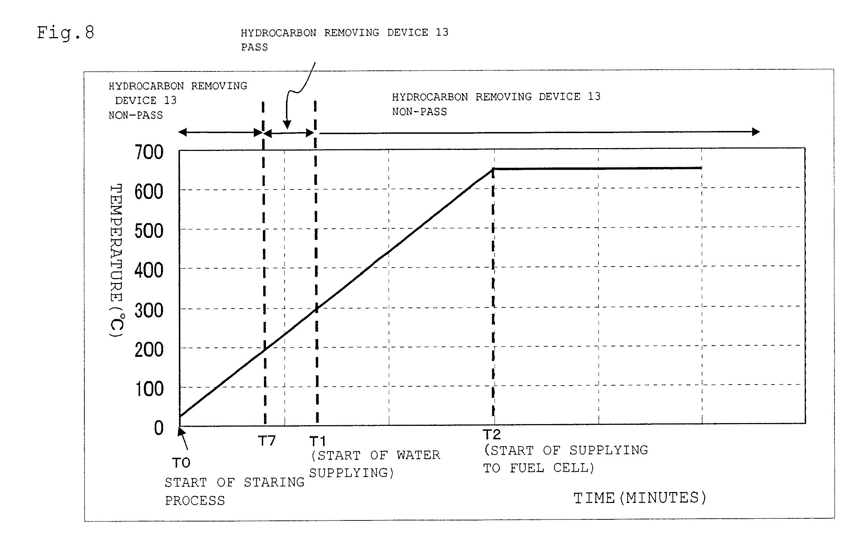

In the hydrogen generating apparatus and the fuel cell system having the same according to the embodiment 1, as described with reference to Fig. 6, in the starting process of the hydrogen generating apparatus 100, the raw material having been passed through the hydrocarbon removing device 13 is supplied to the hydrogen generating device 1, and the temperature increasing operation of supplying the raw material having passed through the hydrogen generating device 1 to the combusting device 2 is performed, in the duration from the start of the temperature increasing operation of the hydrogen generating device 1 to the time when the temperature of the reforming device 30 reaches the first temperature (for example, 300°C) for staring supply of water. However, the hydrogen generating apparatus 100 according to the modified example is so constituted that according to the control of the starting process shown in Fig. 8, the raw material that has not passed through the hydrocarbon removing device 13 is supplied to the hydrogen generating device 1 in the duration from the start of the temperature increasing operation of the hydrogen generating device 1 to the time when the temperature of the reforming device 30 reaches a second temperature (for example, 200°C) lower than the first temperature (start of starting process to T7 in Fig. 8). In the duration, the flow path of the raw material is maintained to the first raw material supplying path 23 by the flow path switching device 9. At the time when the temperature of the reforming device 30 reaches the second temperature or higher, the controlling device 20 switches the flow path switching device 9 to the second raw material supplying path 24, thereby supplying the raw material having passed through the hydrocarbon removing device 13 to the hydrogen generating device 1. Thereafter, at the time when the temperature of the reforming device 30 reaches the first temperature or higher, the controlling device 20 starts supply of water and switches the flow path switching device 9 to the first raw material supplying path 23, thereby supplying the raw material that has not passed through the hydrocarbon removing device 13 to the hydrogen generating device 1.

According to the control, the hydrocarbon removing device 13 is not used in the duration from the start of the starting process to the time when the temperature of the reforming device 30 reaches the second temperature or higher, and thus the service life of the hydrocarbon removing device 13 can be prolonged. The second temperature is defined as the maximum temperature or lower where carbon is not deposited from the raw material supplied to the hydrogen generating device 1, and corresponds to an example of the "first threshold value" in the present disclosure. The flow path control for the raw material in the temperature increasing process from the start of the temperature increasing operation to the second temperature or higher attained corresponds to an example of the "third passage process", and the flow path control for the raw material in the temperature increasing process from the second temperature or higher attained to the first temperature or higher attained corresponds to an example of the "first passage process".

### Modified Example 2

In the hydrogen generating apparatuses and the fuel cell systems having the same in the embodiment 1 and the modified embodiment 1, the supplying path of the raw material is controlled not to pass the hydrocarbon removing device 13 in the temperature increasing operation after starting the supply of water to the hydrogen generating device 1 (i.e., the second passage process is performed), but in the hydrogen generating apparatus and the fuel cell system having the same according to the modified example 2, the supplying path of the raw material may be controlled in such a manner that the raw material having passed through the hydrocarbon removing device 13 is passed through the hydrogen generating device 1 within the duration until the temperature increasing operation of the hydrogen generating device 1 is completed at least.

In this case, for example, when the temperature of the reforming device 30 reaches 650°C or higher, the temperature increasing operation may be completed, and the flow path switching device 9 is switched to the first raw material supplying path 23, thereby supplying the raw material that has not passed through the hydrocarbon removing device 13 to the hydrogen generating device 1. Then, the third shutoff valve 15 is shut off and the second shutoff valve 14 is opened, thereby supplying the hydrogen-containing gas sent from the hydrogen generating device 1 is started to be supplied to the fuel cell 8. The raw material having passed through the hydrocarbon removing device 13 is supplied to the hydrogen generating device 1 until the temperature increasing operation of the hydrogen generating device 1 is completed to provide such a state that the hydrogen-containing gas containing hydrogen in a high concentration is generated stably, whereby the possibility of deteriorating the catalyst can be further suppressed.

### Modified Example 3

A hydrogen generating apparatus and a fuel cell system having the same according to a modified example 3 will be described.

The hydrogen generating apparatus and the fuel cell system having the same according to the embodiment 1 is so constituted that the flow path switching device 9 is switched to the second raw material supplying path 24, thereby supplying the raw material having passed through the hydrocarbon removing device 13 to the hydrogen generating device 1 in the duration from the start of the stopping process of the hydrogen generating apparatus 100 to the time when the temperature of the reforming device 30 reaches room temperature. However, the hydrogen generating apparatus according to the modified embodiment is so constituted that when the temperature of the reforming device 30 is the fifth temperature or lower after stopping the hydrogen generating operation, the flow path switching device 9 is switched to the first raw material supplying path 23, thereby supplying the raw material that has not passed through the hydrocarbon removing device 13 to the hydrogen generating device 1, in the operating step where only the raw material is supplied to the hydrogen generating device 1 (i.e., the pressure supplementing operation and the raw material purge). The "fifth temperature" is defined as the maximum temperature or lower where carbon is not deposited from the raw material even when the raw material that has not passed through the hydrocarbon removing device 13 is supplied, and corresponds to an example of the "second threshold value" in the present disclosure. According to the control performed, the period of time of using the hydrocarbon removing device 13 is shortened, and thus the service life of the hydrocarbon removing device 13 can be prolonged.

The procedures of the passage processes A to C performed after stopping the hydrogen generating operation of the hydrogen generating apparatus 100 are changed depending on the magnitude relationship between the fourth temperature and the fifth temperature, and the like. Specifically, in the case where the fourth temperature is lower than the fifth temperature, and such a state may occur that the temperature of the reforming device 30 is the fifth temperature or lower in the passage process A, such a constitution is used that the passage process A is performed in the state where the temperature of the reforming device 30 is higher than the fifth temperature, and when it is the fifth temperature or lower, the flow path switching device 9 is controlled to supply the raw material that has not passed through the hydrocarbon removing device 13 to the hydrogen generating device 1. The flow path control for the raw material in the pressure supplementing operation at the fifth temperature or lower corresponds to an example of the "passage process A1".

In the case where the fourth temperature is lower than the fifth temperature, and such a state may occur that the temperature of the reforming device 30 is the fifth temperature or lower in the raw material purge, such a constitution is used that the flow constituted path switching device 9 is controlled to supply the raw material that has not passed through the hydrocarbon removing device 13 to the hydrogen generating device 1 during the raw material purge. The flow path control for the raw material in the raw material purge at the fifth temperature or lower corresponds to an example of the "passage process B1".

A temperature lower than the fifth temperature occurs in the duration until the hydrogen generating device 1 reaches room temperature in the passage process C, and thus in the pressure supplementing operation after the raw material purge, the flow path switching device 9 is controlled to supply the raw material that has not passed through the hydrocarbon removing device 13 to the hydrogen generating device 1. The flow path control for the raw material in the pressure supplementing operation at the fifth temperature or lower after the raw material purge corresponds to an example of the "passage process C1".

In the modified example, the control is performed based on the temperature of the reforming device 30, but the control may be performed taking the temperatures of the modifying device 31 and the oxidizing device 32 into consideration.

### Modified Example 4

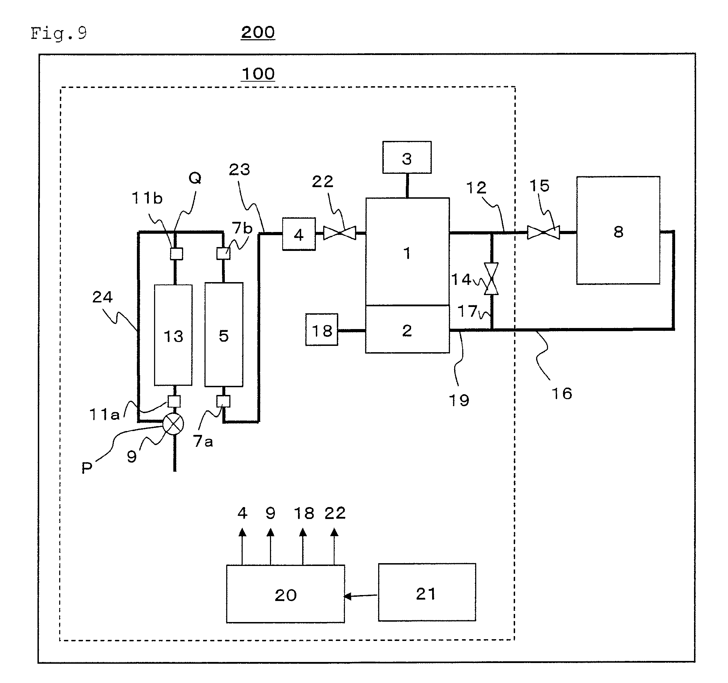

A hydrogen generating apparatus and a fuel cell system having the same according to the modified example 4 will be described. In the hydrogen generating apparatus and the fuel cell system having the same according to the embodiment 1, the hydrocarbon removing device 13 is provided on the flow path of the raw material on the downstream side of the desulfurizing device 5, but in the modified example, such an embodiment is employed that the hydrocarbon removing device 13 is provided on the flow path of the raw material on the upstream side of the desulfurizing device 5. Specifically, as shown in Fig. 9, the hydrocarbon removing device 13 is provided on the upstream side of the desulfurizing device 5. In this case, the "first raw material supplying path that passes the raw material through only the desulfurizing device among the desulfurizing device and the hydrocarbon removing device, and flows the raw material into the hydrogen generating device" is constituted by the second raw material supplying path 24 that is branched from the first raw material supplying path 23 and bypasses the hydrocarbon removing device 13, the first raw material supplying path 23 on the upstream side of the connecting part P to the upstream end of the second raw material supplying path 24, and the first raw material supplying path 23 on the downstream side of the connecting part Q to the downstream end of the second raw material supplying path 24. The "second raw material supplying path that passes the raw material through the desulfurizing device and the hydrocarbon removing device, and flows the raw material into the hydrogen generating device" is constituted by the first raw material supplying path 23.

In this constitution, a part of the sulfur component is adsorbed in the hydrocarbon removing device 13 to provide such a possibility of decreasing the adsorption capacity for the hydrocarbon component, but in the hydrogen generating apparatus and the fuel cell system having the same according to the modified example, the flow path control for the raw material is performed in the similar manner as in embodiment 1 and the modified embodiments 1 to 3 in the operating step of supplying only the raw material, thereby providing similar advantages.

### Modified Example 5

A hydrogen generating apparatus and a fuel cell system having the same according to the modified example 5 will be described. In the hydrogen generating apparatus and the fuel cell system having the same according to the embodiment 1, a raw material containing a hydrocarbon component containing methane as a major component and a sulfur component (for example, city gas) is used, but in the modified example, even in the case where a raw material containing a hydrocarbon component containing propane as a major component and a sulfur component (for example, liquid petroleum gas (representative composition: 80% of propane and 20% of butane) is used, the flow path control for the raw material is performed in the similar manner as in embodiment 1 and the modified embodiments 1 to 3 in the operating step of supplying only the raw material, thereby providing the similar advantages. In this case, however, propane has a longer carbon chain than methane and thus has larger tendency to undergo thermal decomposition, and thus the second temperature and the fifth temperature are set at lower temperatures in the case of the raw material containing propane as a major component, as compared to the case of the raw material containing methane as a major component. Accordingly, such an embodiment is preferably employed that the flow path control for the raw material of supplying the raw material to the hydrogen generating device 1 without passing through the hydrocarbon removing device 13 is performed at a temperature of the reforming device 30 within a temperature range that is lower than the case of using the raw material containing methane as a major component.

### Industrial Applicability

The present disclosure is useful for a hydrogen generating apparatus for a fuel cell system, a fuel cell system containing the same, and the like since a catalyst is suppressed from being deteriorated in an operating step of supplying only a raw material to the hydrogen generating apparatus compared to the conventional art.

### Description of Symbols

- 1: hydrogen generating apparatus
- 2: combusting device
- 3: water supplying device
- 4: raw material supplying device
- 5: desulfurizing device
- 7, 11: connecting device
- 8: fuel cell
- 9: flow path switching device
- 12: hydrogen-containing gas supplying path
- 13: hydrocarbon removing device
- 14: second shutoff valve
- 15: third shutoff valve
- 16: off-gas flow path
- 17: bypass flow path
- 18: combustion fun
- 19: combustion gas supplying path
- 20: controlling device
- 21: inputting device
- 22: first shutoff valve
- 23: first raw material supplying path
- 24: second raw material supplying path
- 25: fourth shutoff valve
- 31: reaction tube
- 32: steam supplying device
- 33: gas supplying device
- 34: condenser
- 35: electric furnace
- 100: fuel cell system

## Claims

1. A hydrogen generating apparatus comprising:
a hydrogen generating device containing a reforming device that generates a hydrogen-containing gas from a raw material containing a sulfur component and a hydrocarbon component;
a desulfurizing device that removes the sulfur component in the raw material by passing the raw material therethrough;
a hydrocarbon removing device that removes a part of the hydrocarbon component in the raw material by passing the raw material therethrough, on an upstream side or a downstream side of the desulfurizing device;
a first raw material supplying path that passes the raw material through only the desulfurizing device among the desulfurizing device and the hydrocarbon removing device, and that flows the raw material into the hydrogen generating device;
a second raw material supplying path that passes the raw material through the desulfurizing device and the hydrocarbon removing device, and that flows the raw material into the hydrogen generating device;
a flow path switching device that switches a flow path of the raw material between the first raw material supplying path and the second raw material supplying path; and
a controlling device that controls operation of the flow path switching device,
the controlling device switching the flow path of the raw material to the second raw material supplying path with the flow path switching device in an operating step of supplying only the raw material to the hydrogen generating device.

2. The hydrogen generating apparatus according to claim 1, wherein the raw material contains methane and at least a hydrocarbon having two or more carbon chain.

3. The hydrogen generating apparatus according to claim 2, wherein the hydrocarbon removing device removes the hydrocarbon having two or more carbon chain.

4. The hydrogen generating apparatus according to claim 1, wherein the raw material contains propane and at least a hydrocarbon having four or more carbon chain.

5. The hydrogen generating apparatus according to claim 4, wherein the hydrocarbon removing device removes the hydrocarbon having four or more carbon chain.

6. The hydrogen generating apparatus according to any one of claims 1 to 5, wherein the hydrocarbon removing device contains a hydrocarbon removing agent containing zeolite.

7. The hydrogen generating apparatus according to any one of claims 1 to 5, wherein the hydrocarbon removing device contains a hydrocarbon removing agent containing activated carbon.

8. The hydrogen generating apparatus according to claim 1, wherein the apparatus comprises:
a first connecting device that connects the desulfurizing device and the first raw material supplying path; and
a second connecting device that connects the hydrocarbon removing device and the second raw material supplying path, and
the first connecting device and the second connecting device have compatibility with each other.

9. The hydrogen generating apparatus according to claim 1, wherein in a hydrogen generating operation in a starting process, the controlling device controls the flow path switching device to switch the flow path of the raw material to the first raw material supplying path.

10. The hydrogen generating apparatus according to claim 1, wherein
the apparatus comprises a combustion device that heats the reforming device,
the apparatus is so constituted that the raw material having passed through the hydrogen generating device is combusted in the combustion device to perform a temperature increasing operation of heating the reforming device in a starting process, and
the controlling device, in the temperature increasing operation, controls the flow path switching device to switch the flow path of the raw material to the first raw material supplying path when the temperature of the reforming device is less than a first threshold value, and controls the flow path switching device to switch the flow path of the raw material to the second raw material supplying path when the temperature of the reforming device is the first threshold value or more.

11. The hydrogen generating apparatus according to claim 1, wherein
the apparatus is so constituted that a pressure supplementing operation of supplying the raw material to the hydrogen generating device is performed to increase the pressure inside the hydrogen generating device, which had been decreased after stopping a hydrogen generating operation, and
the controlling device, in the pressure supplementing operation, controls the flow path switching device to switch the flow path of the raw material to the second raw material supplying path.

12. The hydrogen generating apparatus according to claim 1, wherein
the apparatus is so constituted that raw material purge of purging an interior of the hydrogen generating device with the raw material is performed after stopping a hydrogen generating operation, and
the controlling device, in the raw material purge, controls the flow path switching device to switch the flow path of the raw material to the second raw material supplying path.

13. The hydrogen generating apparatus according to claim 1, wherein
the apparatus is so constituted that a pressure supplementing operation of supplying the raw material to the hydrogen generating device is performed to increase the pressure inside the hydrogen generating device, which had been decreased after stopping a hydrogen generating operation, and
is so constituted that raw material purge of purging an interior of the hydrogen generating device with the raw material is performed after stopping a hydrogen generating operation, and
the controlling device, in at least one of the pressure supplementing operation and the raw material purge, controls the flow path switching device to switch the flow path of the raw material to the first raw material supplying path when the temperature of the reforming device is less than a second threshold value, and controls the flow path switching device to switch the flow path of the raw material to the second raw material supplying path when the temperature of the reforming device is the second threshold value or more.

14. A fuel cell system comprising the hydrogen generating apparatus according to any one of claims 1 to 13 and a fuel cell that uses the hydrogen-containing gas sent from the hydrogen generating apparatus as a fuel.

15. A method for operating a hydrogen generating apparatus,
the hydrogen generating apparatus comprising:
a hydrogen generating device containing a reforming device that generates a hydrogen-containing gas from a raw material containing a sulfur component and a hydrocarbon component;
a desulfurizing device that removes the sulfur component in the raw material by passing the raw material therethrough;
a hydrocarbon removing device that removes a part of the hydrocarbon component in the raw material by passing the raw material therethrough, on an upstream side or a downstream side of the desulfurizing device;
a first raw material supplying path that passes the raw material through only the desulfurizing device among the desulfurizing device and the hydrocarbon removing device, and flows the raw material into the hydrogen generating device;
a second raw material supplying path that passes the raw material through the desulfurizing device and the hydrocarbon removing device, and flows the raw material into the hydrogen generating device; and
a flow path switching device that switches a flow path of the raw material between the first raw material supplying path and the second raw material supplying path, and
the method comprising a step of switching the flow path of the raw material to the second raw material supplying path with the flow path switching device in an operating step of supplying only the raw material to the hydrogen generating device.

16. The method for operating a hydrogen generating apparatus according to claim 15, wherein in a hydrogen generating operation in a starting process, the flow path switching device is controlled to switch the flow path of the raw material to the first raw material supplying path.

17. The method for operating a hydrogen generating apparatus according to claim 15, wherein
the hydrogen generating apparatus comprises a combustion device that heats the reforming device,
the apparatus is so constituted that the raw material having passed through the hydrogen generating device is combusted in the combustion device to perform a temperature increasing operation of heating the reforming device in a starting process, and
in the temperature increasing operation, the flow path switching device is controlled to switch the flow path of the raw material to the first raw material supplying path when the temperature of the reforming device is less than a first threshold value, and the flow path switching device is controlled to switch the flow path of the raw material to the second raw material supplying path when the temperature of the reforming device is the first threshold value or more.

18. The method for operating a hydrogen generating apparatus according to claim 15, wherein
the hydrogen generating apparatus is so constituted that a pressure supplementing operation of supplying the raw material to the hydrogen generating device is performed to increase the pressure inside the hydrogen generating device, which had been decreased after stopping a hydrogen generating operation, and
in the pressure supplementing operation, the flow path switching device is controlled to switch the flow path of the raw material to the second raw material supplying path.

19. The method for operating a hydrogen generating apparatus according to claim 15, wherein
the hydrogen generating apparatus is so constituted that raw material purge of purging an interior of the hydrogen generating device with the raw material is performed after stopping a hydrogen generating operation, and
in the raw material purge, the flow path switching device is controlled to switch the flow path of the raw material to the second raw material supplying path.

20. The method for operating a hydrogen generating apparatus according to claim 15, wherein
the hydrogen generating apparatus is so constituted that a pressure supplementing operation of supplying the raw material to the hydrogen generating device is performed to increase the pressure inside the hydrogen generating device, which had been decreased after stopping a hydrogen generating operation, and
is so constituted that raw material purge of purging an interior of the hydrogen generating device with the raw material is performed after stopping a hydrogen generating operation, and
in at least one of the pressure supplementing operation and the raw material purge, the flow path switching device is controlled to switch the flow path of the raw material to the first raw material supplying path when the temperature of the reforming device is less than a second threshold value, and the flow path switching device is controlled to switch the flow path of the raw material to the second raw material supplying path when the temperature of the reforming device is the second threshold value or more.
